Europäisches Patentamt

European Patent Office

Office européen des brevets

(11) Publication number: 0 417 684 A1

# EUROPEAN PATENT APPLICATION

(21) Application number: 90117364.1

(22) Date of filing: 10.09.90

(51) Int. Cl.⁵: A21C 3/06, A21C 9/08

(30) Priority: 13.09.89 IT 4169489

(43) Date of publication of application:
20.03.91 Bulletin 91/12

(84) Designated Contracting States:
CH DE ES FR GB LI NL

(71) Applicant: C.I.M. S.r.l.
Via Udine 5
I-35035 Mestrino (Padova)(IT)

(72) Inventor: Bordin, Italo
Via Tintoretto 2
I-35010 Cadoneghe (Padova)(IT)

(74) Representative: Modiano, Guido et al
MODIANO, JOSIF, PISANTY & STAUB
Modiano & Associati Via Meravigli, 16
I-20123 Milano(IT)

(54) Device for the distribution of triangles of dough in croissant-making machines.

(57) A device for the distribution of triangles of dough in croissant-making machines comprising, after a known station for laminating a sheet of dough and a known station for cutting it into transverse rows of triangles having vertices with alternately opposite orientations, a conveyor belt (6) which oscillates about a vertical plane between two positions which connect the plane of advancement of the triangles, according to the orientation of their vertices, respectively to an upper conveyor belt (8) or to a lower conveyor belt (9). The oscillating conveyor belt (6) is conveniently actuated by electronic sensors (17,18) suitable for recognizing the orientation of the rows of triangles. Each conveyor belt (8,9) is connected to a respective known rolling station (21,22,23) and is actuated by an electronic apparatus (19,20) suitable for adjusting the distance between the rows of triangles which pass thereon.

Fig. 2

# DEVICE FOR THE DISTRIBUTION OF TRIANGLES OF DOUGH IN CROISSANT-MAKING MACHINES

The present invention relates to a device for the distribution of triangles of dough in croissant-making machines.

As is known, currently commercially available machines suitable for the production of croissants, which are food products obtained by rolling a triangle of dough which subsequently undergoes baking, comprise various processing stations linked by conveyor belts.

A first lamination station sets the thickness of a sheet of dough, whereas a second cutting station divides the sheet of dough into transverse rows of triangles the vertices whereof alternately have opposite orientations.

In a final station the triangles of dough are then rolled prior to baking.

Indeed due to the fact that the rows of triangles have vertices with alternately opposite orientations, devices suitable for overturning the rows of triangles which have an unsuitable orientation have been devised if the machine has a single rolling station.

In other cases the machines have two opposite rolling stations, each of which is alternately fed with a row of triangles produced by the cutting action.

Though these machines are potentially capable of producing twice the amount of croissants with respect to machines with a single rolling station by practically halving the machine times, two-station machines are still not optimized from a productive point of view.

In said machines, production times are in fact mainly linked to the fact that a single row of triangles at a time reaches each rolling station.

The aim of the present invention is to provide a device which, when applied to a croissant-making machine with a double rolling station, allows to considerably increase its production with respect to known types of machine.

A consequent primary object is to provide a device which, when applied to a croissant-making machine, allows to feed each rolling station simultaneously with more than one row of triangles.

Another object is to provide a croissant-making machine which is completely automatic and intended for large bakeries.

Not least object is to have low costs which can be obtained with conventional systems.

This aim, these objects and others which will become apparent hereinafter are achieved by a device for distributing dough triangles in croissant-making machines, characterized in that it comprises, after known stations for laminating a sheet of dough and for cutting it into transverse rows of triangles the vertices whereof have alternately opposite orientations, a conveyor belt which is actuated by electronic sensors and oscillates about a vertical plane between two positions which are suitable for connecting the advancement plane of the dough triangles, according to the orientation of their vertices, respectively to an upper conveyor belt or to a lower conveyor belt, each of said conveyor belts being connected to a respective known rolling station and being actuated by an electronic apparatus suitable for adjusting the distance between the rows of triangles which transit thereon.

Further characteristics and advantages of the invention will become apparent from the detailed description of a preferred embodiment thereof, illustrated only by way of non-limitative example in the accompanying drawings, wherein:

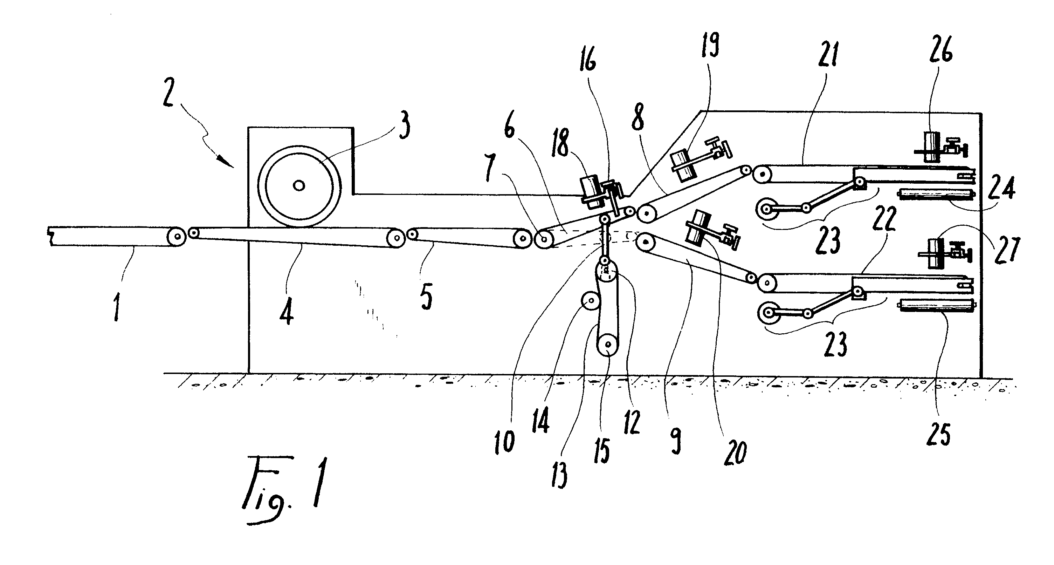

figure 1 is a schematic sectional elevation view of a part of a croissant-making machine provided with the distribution device according to the invention;

figure 2 is an enlarged schematic perspective view of a detail of the distribution device according to the invention.

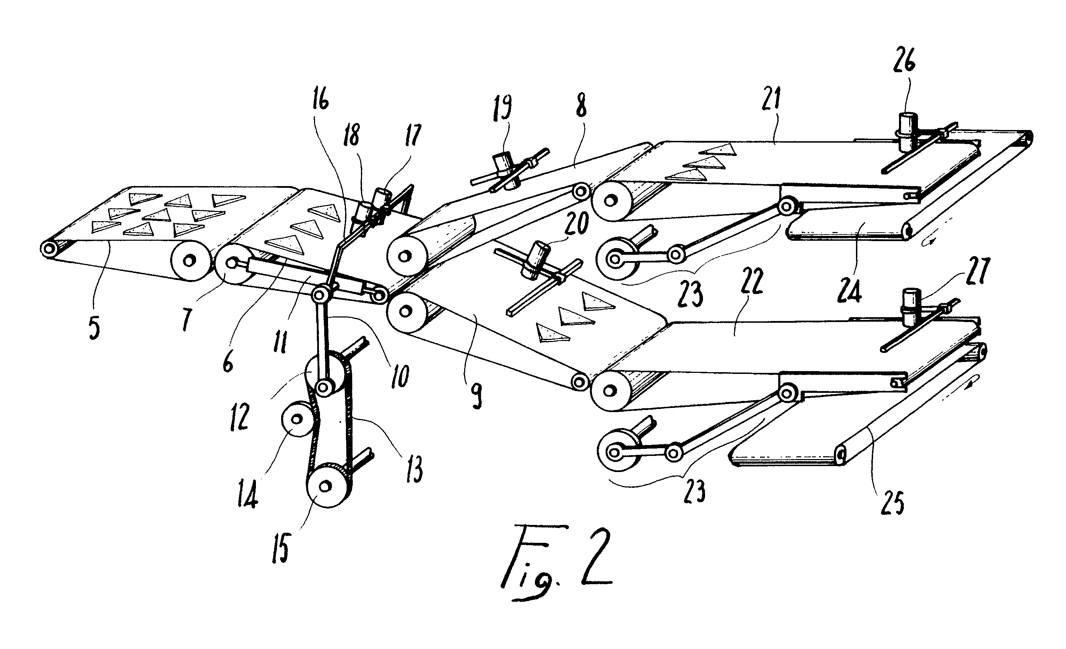

With reference to the above figures, a croissant-making machine provided with the device according to the invention comprises, after a lamination station which is not illustrated in the figures and from which the set-thickness sheet of dough exits by means of a conveyor belt 1, a cutting station 2 composed of a known metallic bladed cylinder 3 which is arranged above a conveyor belt 4 and is suitable for dividing the sheet of dough into rows of triangles which, as illustrated in figure 2, have vertices with alternately opposite orientations.

After the conveyor belt 4, the advancement plane of the dough triangles is continued by another conveyor belt 5 which, by virtue of its different advancement speed, is suitable for mutually spacing the rows of triangles.

The distribution device according to the invention is arranged after the conveyor belt 5 and comprises a conveyor belt 6 which oscillates on a vertical plane, i.e. the support plane of the belt 6 rotates about the axis of its roller 7 which is arranged adjacent to the conveyor belt 5, between two positions suitable for connecting the advancement plane of the dough triangles, according to the orientation of their vertices, respectively to an upper inclined conveyor belt 8 and to a lower inclined conveyor belt 9.

Conveniently, the oscillating movement of said conveyor belt 6 is actuated by a kinematic system which comprises a connecting rod 10 the ends whereof are respectively rotatably coupled to the frame 11 of said conveyor belt 6 and in an eccentric position on a gearwheel 12 which is connected, by means of a chain 13 with a tensioning element 14, to another gearwheel 15 rigidly associated with an actuation motor which is not illustrated.

A framework 16 which is arranged above the conveyor belt 6 and is rigidly associated with its frame 11 supports two electronic sensors, respectively 17 and 18, for example of the type commonly termed "micro", which are suitable for recognizing the orientation of the various rows of dough triangles which pass below them and for giving the activation pulse to the drive system to actuate the movement of the conveyor belt 6 toward one or the other of the belts 8 and 9.

In practice, depending on which of the two sensors 17 or 18, which are located in a region where the base or of the vertex of one of the triangles passes, first intercepts the dough, the conveyor belt 6 is deflected upward or downward.

Another electronic sensor of the "micro" type, respectively indicated by 19 and 20, is supported above each of the conveyor belts 8 and 9 by a framework fixed between the walls of the machine, and is suitable for exciting a corresponding encoder which is for example applied on the axis of the driving roller of the belt and counts the angular advancement pulses, which correspond to a forward advancement of the dough, comparing them with a preset value set on a Contraves unit, thus causing the stopping and advancement of the appropriate belts in order to position at the required distance the various rows of triangles of dough unloaded thereon.

Both of the encoders associated with said sensors 19 and 20 are connected to a third Contraves unit on which the base dimension of the dough triangles, which can appropriately vary among different productions, is preset, and can thus, again by counting the angular pulses, perform the spacing between the rows of triangles, taking this last variation into account as well.

The rows of dough triangles pass from said conveyor belts 8 and 9 respectively onto horizontal conveyor belts 21 and 22, each of which has a known device 23 for unloading the rows of dough triangles which is suitable for causing the end of the corresponding belt to move alternately so that said triangles fall onto corresponding conveyor belts 24 and 25 which are arranged below and orthogonally to the preceding ones and each of which feeds a respective rolling station which is not illustrated in the figures.

Respective electronic sensors 26 and 27 are located above the end region of the conveyor belts 21 and 22 and are suitable for detecting the presence of the rows of triangles for unloading.

Each conveyor belt 21 and 22 is capable of unloading onto the corresponding belt 24 or 25 the required number of rows of dough triangles so that each rolling station is fed and operates simultaneously on a plurality of triangles.

It should therefore be stressed that the described machine, provided with the distribution device according to the invention, is capable of varying its croissant production according to the requirements of production and is therefore particularly flexible from an operational point of view.

The use of the new distribution device has furthermore allowed to reduce machine times and therefore to optimize production in operating conditions comparable with those possible with current machines.

It has thus been observed in practice that the invention has achieved the intended aim and objects.

The invention thus conceived is susceptible to numerous modifications and variations, all of which are within the scope of the inventive concept.

All the details may furthermore be replaced with other technically equivalent elements.

In practice, the materials employed, as well as the dimensions, may be any according to the requirements.

Where technical features mentioned in any claim are followed by reference signs, those reference signs have been included for the sole purpose of increasing the intelligibility of the claims and accordingly such reference signs do not have any limiting effect on the scope of each element identified by way of example by such reference signs.

**Claims**

1. Device for distributing dough triangles in croissant-making machines, characterized in that it comprises, after known stations for laminating dough sheets and for cutting them into transverse rows of triangles having vertices with alternately opposite orientations, a conveyor belt (6) which is actuated by electronic sensors (17,18) and oscillates in a vertical plane between two positions suitable for connecting the advancement plane of the dough triangles, according to the orientation of their vertices, respectively to a upper conveyor belt (8) or to a lower conveyor belt (9), each conveyor belt being connected to a respective known rolling station (21,22,23) and being actuated by an electronic apparatus (19,20) suitable for adjusting the distance between the rows of triangles which pass thereon.

2. Distribution device according to claim 1, characterized in that the support plane of said oscillating conveyor belt (6) is rotatable about the axis of its driving roller (7), located toward the cutting station, an end of a connecting rod (10) being rotatably coupled to its supporting framework (11), the opposite end of said connecting rod (10) being rotatably coupled eccentrically to a gear system (12) which is kinematically connected, by means of a chain transmission (13), to an electric actuation motor.

3. Distribution device according to claims 1 and 2, characterized in that two electronic sensors (17,18) for the activation of said actuation motor are located above said conveyor belt (6), said electronic sensors (17,18) , for example of the type commonly termed "micro", being arranged so as to encounter a base or a vertex of a passing triangle and to detect, depending on which of them accepts a triangle first, the orientation of the passing row, actuating or not the rotation of the conveyor belt (6) about the roller axis (7).

4. Distribution device according to one or more of the preceding claims, characterized in that an electronic sensor (19,20), for example of the type commonly termed "micro", is arranged both above said upper conveyor belt (8) and above said lower conveyor belt (9) and is connected to a respective encoder which is preferably coupled to the driving roller of the respective conveyor belt, said encoders being suitable for comparing angular pulses counted by them with the pulses set on respective Contraves units, so as to adjust, by means of an appropriate actuation of the belts (8,9), the distance between the rows of triangles in transit.

5. Distribution device according to one or more of the preceding claims, characterized in that said encoders are connected to a third Contraves unit in which the number of pulses corresponding to the base length of the triangles is set, said length being variable according to the type of production, said encoders comparing the pulses counted thereby when the electronic sensors connected thereto intercept the bases of the triangles with the data preset on said third Contraves unit, adjusting the actuation of the corresponding conveyor belt (8,9).

Fig. 1

EP 0 417 684 A1

Fig. 2

European
Patent Office

**EUROPEAN SEARCH
REPORT**

Application Number

**EP 90 11 7364**

# DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | FR-A-2 521 400  (B. COGO) <br> * the whole document * <br> — — — | 1 | A 21 C 3/06 <br> A 21 C 9/08 |
| A | FR-A-2 226 804  (E.G.M. FONTAINE) <br> — — — | | |
| A | FR-A-2 550 056  (M. CHANDIOUX ET AL) <br> — — — | | |
| A | US-A-4 155 441  (R.J. ALBRECHT ET AL) <br> — — — — — | | |

TECHNICAL FIELDS
SEARCHED (Int. Cl.5)

A 21 C

The present search report has been drawn up for all claims

| Place of search | Date of completion of search | Examiner |
|---|---|---|
| The Hague | 26 November 90 | FRANKS N.M. |